Europäisches Patentamt

(19) European Patent Office

Office européen des brevets

(11) Numéro de publication : **0 580 485 A1**

(12) **DEMANDE DE BREVET EUROPEEN**

(21) Numéro de dépôt : **93401851.6**

(22) Date de dépôt : **19.07.93**

(51) Int. Cl.⁵ : **G01N 27/90**

(30) Priorité : **20.07.92 FR 9208941**

(43) Date de publication de la demande :
**26.01.94 Bulletin 94/04**

(84) Etats contractants désignés :
**DE ES FR GB IT NL**

(71) Demandeur : **COMPAGNIE GENERALE DE GEOPHYSIQUE**
**1, Rue Léon Migaux**
**F-91300 Massy (FR)**

(72) Inventeur : **Andrieux, Pierre**
**41, Avenue Raymond Aron**
**F-92160 Antony (FR)**

(74) Mandataire : **Schrimpf, Robert et al**
**Cabinet Regimbeau 26, Avenue Kléber**
**F-75116 Paris (FR)**

(54) **Système de contrôle de canalisations notamment de canalisations en acier nu ou enrobé.**

(57) La présente invention concerne un système de contrôle de canalisations, notamment de canalisations en acier nu ou enrobé comprenant un dispositif électromagnétique par induction (100) comportant un élément émetteur (110) et un élément récepteur (120), un générateur (114) apte à appliquer un signal électrique variable à l'élément émetteur (110), un moyen (124) de mesure du signal aux bornes de l'élément récepteur (120), un moyen (126) de traitement du signal mesuré aux bornes de l'élément récepteur (120) apte à déterminer la perméabilité magnétique de la canalisation et la conductivité ou la conductance électrique de celle-ci, par résolution à l'aide d'une méthode itérative d'un système d'équations non linéaires qui décrivent le comportement des composantes du champ magnétique.

FIG.1

EP 0 580 485 A1

La présente invention concerne le domaine des dispositifs de contrôle de l'état de canalisations.

Plus précisément, la présente invention s'applique notamment, mais non exclusivement, au contrôle des canalisations en acier nu ou enrobé, notamment enrobé de béton précontraint, telles que les canalisations utilisées pour véhiculer de l'eau.

La présente invention a pour but de détecter une éventuelle corrosion desdites canalisations.

La technique la plus classique pour contrôler la qualité de canalisations non métalliques est d'utiliser un système de type radar.

En revanche à ce jour, il n'existe aucun système industriel apte à contrôler l'état d'une canalisation métallique. En effet, la technique connue à base de radar ne permet pas le contrôle de canalisations en métal, notamment en acier, dans la mesure où celui-ci se montre trop bon réflecteur à l'égard des ondes électromagnétique générées par le système radar. De ce fait, à la connaissance de la Demanderesse, il n'existe pas à ce jour de système permettant de déceler des zones éventuelles de corrosion sur des conduites métalliques.

La présente invention a maintenant pour but de proposer un système permettant de contrôler l'état de canalisations métalliques, notamment de canalisations en acier.

Ce but est atteint selon la présente invention grâce à un système de contrôle comprenant :
- un dispositif électromagnétique par induction comportant un élément émetteur et un élément récepteur,
- un générateur électrique apte à appliquer un signal variable à l'élément émetteur,
- un moyen de mesure sensible au signal généré aux bornes de l'élément récepteur, et
- un moyen de traitement du signal mesuré aux bornes de l'élément récepteur, apte à déterminer la perméabilité magnétique de la canalisation et la conductivité ou la conductance électrique de celle-ci, par résolution à l'aide d'une méthode itérative d'un système d'équations non linéaires qui décrivent le comportement des composantes du champ magnétique.

Selon une caractéristique avantageuse de la présente invention, le capteur électromagnétique comprend deux bobines à axes coplanaires servant respectivement d'élément émetteur et d'élément récepteur.

Selon une autre caractéristique avantageuse de la présente invention, le signal variable appliqué à l'élément émetteur est un signal électrique sinusoïdal.

Il a déjà été proposé pour des procédés de prospection géophysique d'utiliser un dispositif comprenant une bobine émettrice recevant un signal électrique variable, généralement sinusoïdal, et une bobine réceptrice, afin de détecter des minéralisations massives conductrices situées à des profondeurs variant de quelques mètres à quelques centaines de mètres environ.

Cette technique est connue pour la prospection géophysique sous le nom de procédé SLINGRAM et décrite dans tous les traites de géophysique appliquée

Selon la technique connue décrite dans ce document, on tente d'extraire, à partir des grandeurs mesurées aux bornes de la bobine réceptrice, la conductivité vraie ($\sigma_i$) de chaque formation géologique au voisinage du dispositif ou sa conductance ($C_i=\sigma_i.e_i$, où $e_i$ représente son épaisseur), lorsqu'il s'agit d'une formation très conductrice et peu épaisse. Pour arriver à cette fin, dans le cas d'un sous-sol complexe, on utilise des signaux émetteurs de fréquence différentes couvrant une large gamme si l'on travaille dans le domaine fréquentiel (1, 2, 3, 4 décades ou plus) ; si l'on travaille dans le domaine temporel, on doit couvrir des phénomènes transitoires qui couvrent également plusieurs décades (de quelques microsecondes à quelques millisecondes).

On a décrit par ailleurs dans le document "Parchas C. and Tabbagh A. 1978, Simultaneous measurements of electrical conductivity and magnetic susceptibility of the ground in electromagnetic prospecting, Archaeo - Physika 10, 682-691", un dispositif semblable adapté pour la prospection archéologique. Le système décrit dans ce document, détermine simultanément deux caractéristiques physiques du sous-sol, la conductivité $\sigma$ (en Siemens) et la perméabilité magnétique $\mu$ (en Henry/m). Pour des raisons de simplicité, l'équipement actuel mettant en oeuvre le principe décrit dans le document précité, travaille dans le domaine fréquentiel.

La fréquence unique choisie est telle que les équations de diffusion de champ électromagnétique se simplifient. Ils travaillent dans le domaine asymptotique dit "des faibles nombres d'onde d'induction". Cette notion sera développée dans la partie théorique ci-après. Dans ce domaine, où les équations sont simples, comme il a été mentionné ci-dessus :
- la perméabilité magnétique (H) est extraite de la mesure de la Partie Réelle ou Partie en Phase de la composante du champ magnétique secondaire mesuré, tandis que
- la conductivité électrique ($\sigma$) est extraite de la mesure de la Partie Imaginaire ou Partie en Quadrature.

Plus précisément, le système connu pour prosepction archéologique comprend deux bobines à axes parallèles, obliques par rapport aux interfaces à contrôler, avec une distance "a", entre la bobine émettrice et la bobine réceptrice, égale à 1,50m. La fréquence utilisée est de 8040Hz. Cette fréquence conduit au domaine asymptotique des faibles nombres d'onde.

En effet, soit $\mu=\mu o=4\pi.10^{-7}H/m$
$\sigma=10^{-1}S$

on obtient $|ka|=a(2\pi F\mu\sigma)^{1/2}=0,12$.

Cependant, on ne peut travailler dans le domaine asymptotique, tel que $|ka|<1$, pour le contrôle de canalisations métalliques, par exemple en acier.

En effet, pour une canalisation en acier dont les caractéristiques sont déterminantes face à celles du béton et de l'encaissant soit

$\sigma=10^7 S$

$\mu=4\pi.10^{-5} H/m$

et en prenant des valeurs

$a=10^{-2}m$

$e=4.10^{-3}m$

qui seraient compatibles avec le contrôle de l'état de canalisations,

pour avoir $|ka|=1$, sachant que $ka=(2\pi F\mu\sigma ea)^{1/2}$,

on obtient : $F=3Hz$.

Une telle très basse fréquence de 3Hz n'est pas compatible avec le contrôle de canalisations. D'une part, elle exigerait pour permettre une sensibilité suffisante, un diamètre de bobine important, incompatible avec un écart $a=10^{-2}m$ entre les bobines. D'autre part, elle exigerait un temps de mesure inacceptable.

Pour ces raisons, l'homme de l'art ne pouvait envisager de transposer la technique de prospection dite SLINGRAM et précisée par Pachas et Tabbagh au contrôle de canalisations métalliques.

D'autres caractéristiques, buts et avantages de la présente invention apparaîtront à la lecture de la description détaillée qui va suivre, et en regard des dessins annexés donnés à titre d'exemples non limitatifs et sur lesquels :

- la figure 1 représente une vue schématique d'un système conforme à la présente invention placé en regard d'une paroi de canalisation à contrôler,
- la figure 2 représente schématiquement cinq configurations possibles de bobines du dispositif capteur conforme à la présente invention,
- la figure 3 représente l'évolution de la partie réelle et de la partie imaginaire du champ magnétique secondaire rapportées au champ primaire pour l'une des configurations représentées figure 2 et pour les valeurs des paramètres donnés précédemment, en fonction de la fréquence d'excitation utilisée, et
- la figure 4 représente une vue schématique en coupe transversale, selon l'axe d'une canalisation, d'un système conforme à un mode de réalisation préférentiel de la présente invention.

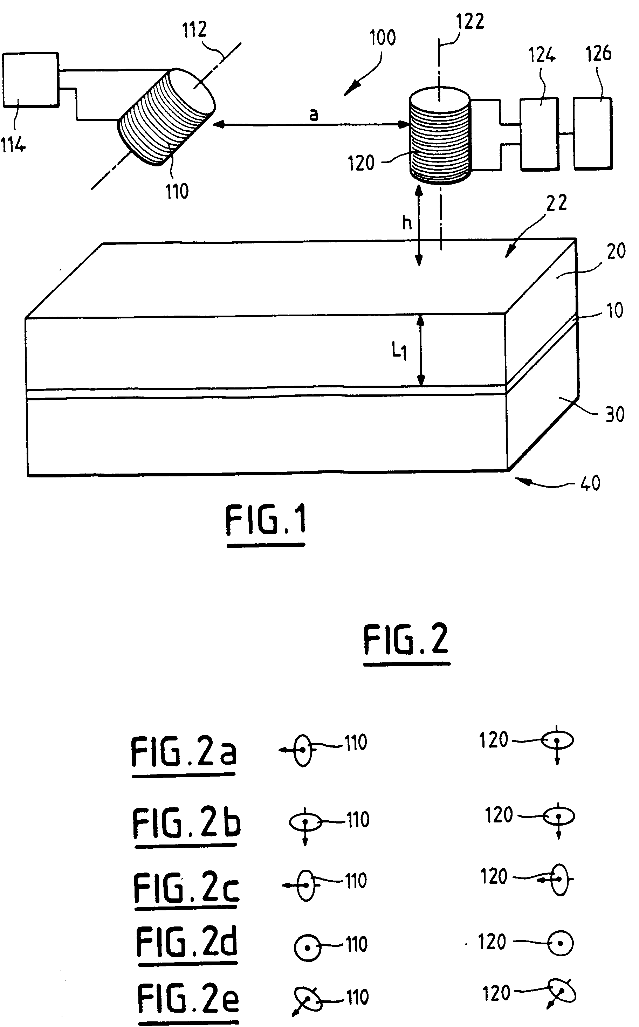

Comme on l'a indiqué précédemment et comme représenté sur la figure 1 annexée, la présente invention s'applique notamment au contrôle de l'état de canalisations en acier revêtu de béton, afin de détecter une éventuelle corrosion des canalisations.

Sur la figure 1 annexée, on a référencé 10 la paroi en acier de la canalisation et on a référencé respectivement 20 et 30 les enrobages de béton précontraint placés sur l'intérieur et sur l'extérieur du tubage d'acier 10. Les couches "tabulaires" de béton précontraints 20, 30 placées respectivement sur l'intérieur et sur l'extérieur de la canalisation en acier 10, ont une épaisseur typiquement de l'ordre de 4 à 5cm, tandis que la canalisation en acier a typiquement une épaisseur de l'ordre de 4mm.

L'encaissant, c'est-à-dire le milieu environnant la canalisation est référencé 40 sur la figure 1.

La structure ainsi formée à étudier peut donc être considérée à l'échelle de dispositif comme une structure tabulaire à cinq couches, dont l'air situé à l'intérieur de la couche de béton 20, lorsque la canalisation est hors service.

Les caractéristiques physiques de chaque milieu sont appelées :

$\sigma_i$ : conductivité électrique,

$\mu_i$ : perméabilité magnétique,

$\varepsilon_i$ : permittivité diélectrique,

avec pour indice i :

o : pour la couche d'air située à l'intérieur de la couche de béton 20,

1 : pour la couche interne de béton 20,

2 : pour la canalisation en acier 10,

3 : pour la couche externe de béton 30,

4 : pour l'environnement 40.

Comme évoqué précédemment et comme montré sur la figure 1, le système de contrôle conforme à la présente invention comprend un dispositif capteur 100 conçu pour être placé de préférence à l'intérieur de la canalisation. Ce dispositif 100 comporte de préférence deux bobines 110, 120. Les deux bobines 110, 120, ont de préférence des axes 112, 122 coplanaires. La disposition des deux bobines 110, 120 peut faire l'objet d'un grand nombre de configurations.

De préférence, la disposition des bobines 110, 120 est choisie dans l'une des cinq dispositions représentées sur la figure 2.

Plus précisément, ces cinq dispositions des deux bobines 110, 120, sont les suivantes sachant que émetteur et récepteur sont interchangeables du fait du théorème de réciprocité :

- Figure 2a : bobines 110, 120 perpendiculaires entre elles, l'une émettrice 110 ayant son axe 112 parallèle aux interfaces à contrôler et l'autre réceptrice 120, ayant son axe 122 perpendiculaire auxdites interfaces à contrôler,
- Figure 2b : bobines 110, 120 ayant chacune son axe 110, 120 perpendiculaire aux interfaces à contrôler,
- Figure 2c : bobines 110, 120 coaxiales ayant leurs axes 112, 122 parallèles aux interfaces à contrôler,
- Figure 2d : bobines 110, 120 ayant leurs axes 112, 122 parallèles entre eux et parallèles aux interfaces à contrôler,
- Figure 2e : bobines 110, 120 ayant leurs axes 112, 122 parallèles entre eux et obliques par rapport aux interfaces à contrôler.

Le mode de réalisation représenté sur la figure 2e peut être considéré comme une combinaison des modes de réalisation représentés sur les figures 2a à 2c.

Comme indiqué précédemment, de préférence dans toutes les configurations, les axes 112, 122 des bobines sont coplanaires.

De préférence, les deux bobines 110, 120 sont de structure identique. Elles sont multispires. Les deux bobines 110, 120 peuvent être réalisées par exemple par bobinage d'un fil fin de cuivre sur un support sans noyau réalisé à base de matière plastique par exemple ou sur un support avec noyau magnétique.

Les bobines 110, 120 ont typiquement un diamètre de 1 à 4cm. Leur hauteur est également typiquement de l'ordre de 1 à 4cm.

La distance entre les deux bobines 110, 120, est typiquement de l'ordre de 5 à 20cm, très avantageusement de l'ordre d'une dizaine de cm.

La distance a entre les deux bobines 110, 120, est typiquement de 1 à 5 fois, la distance séparant le capteur 100 de la paroi de canalisation 10 à contrôler, soit en l'espèce de 1 à 5 fois, l'épaisseur L1 de la couche intérieure de béton 20, additionnée de la distance h entre le dispositif 100 et la surface interne 22 de la couche intérieure de béton 20.

Le dispositif capteur 100 est rendu étanche, lorsqu'il est placé dans une canalisation en charge, notamment dans de l'eau.

La bobine 110 reçoit un signal électrique variable en provenance d'un générateur schématisé sous la référence 114 sur la figure 1. Le signal électrique issu du générateur 114 et appliqué à la bobine émettrice 110 est de préférence un signal sinusoïdal possèdant une fréquence comprise entre 1 et 1000Hz.

En variante, le signal électrique issu du générateur 114 peut être du type créneau ou échelon, ou toute autre forme similaire pourvu que la gamme des temps ou des fréquences soit adaptée.

Le courant électrique appliqué par le générateur 114 à la bobine 110 crée dans l'air et dans le milieu environnant non conducteur, un champ magnétique alternatif en phase avec le courant primaire dit champ primaire Hp.

Ce champ primaire, variable dans le temps, crée par induction dans l'acier très conducteur 10 et dans le milieu environnant éventuellement conducteur 40, des courants électriques variables, qui eux-mêmes créent un champ magnétique secondaire Hs.

Ce champ magnétique secondaire Hs va dépendre de la corrosion de la canalisation 10, du fait que cette corrosion diminue la conductivité $\sigma$ (Siemens/m) et l'épaisseur e (mm), donc la conductance $C = \sigma.e$ (millisiemens). La corrosion de la canalisation affecte également la perméabilité magnétique de l'acier.

La bobine réceptrice 120 permet de mesurer la composante axiale du champ magnétique total Ht, c'est-à-dire la superposition du champ primaire et du champ secondaire.

Le système conforme à la présente invention comprend en outre un élément 124 de mesure du signal généré aux bornes de la bobine réceptrice 120 et un moyen 126 de traitement du signal mesuré par le moyen 124.

Le moyen de traitement 126 est adapté pour déterminer la conductivité électrique ou la conductance de la paroi 10 ainsi que la perméabilité magnétique de celle-ci par résolution des équations non linéaires du système donnant le champ total en fonction de la conductance et de la perméabilité de la canalisation. Cette résolution est opérée par une méthode itérative, telle que de la méthode de Newton-Raphson décrite dans le document "Ortega J. and Rheniboldt W. , 1970, Iterative Solution of Non Linear Equations in Several Variables New York, Academic Press".

Dans l'étude des phénomènes électromagnétiques, on définit, le nombre d'onde $K_i$ dans chaque formation tel que

$$K_i^2 = \mu_i\omega(\omega\varepsilon_i - j\sigma_i)$$

pour un signal sinusoïdal de pulsation $\omega=2\pi F$ où F est la fréquence.

Dans la gamme de fréquence dans laquelle nous travaillons : $\omega\varepsilon<<\sigma$ si bien que :

$$K_i{}^2 = -j\omega\mu_i\sigma_i$$

On définit la constante de propagation qui, compte-tenu de la symétrie, se réduit à :

$$(u_i)^2 = (\lambda^2 - K_i{}^2)^{1/2}$$

où $\lambda$ est une constante dite d'intégration qui varie de $-\infty$ à $+\infty$.

Les équations résolues par le moyen 126 font intervenir les caractéristiques physiques des milieux (béton 20, 30, canalisation métallique 10 et encaissant 40), ainsi que les grandeurs mesurées H.

Les équations correspondantes pour les cinq configurations représentées sur les figures 2a à 2d sont les suivantes :

Dispositif de la figure 2a:

$$Hz = \frac{m}{4\pi} \int_0^{\cdot\infty} (1 + r_{TE}e^{-2\lambda h})\ \lambda^2 J_1(\lambda a)\,d\lambda$$

Dispositif de la figure 2b :

$$Hz = \frac{m}{4\pi} \int_0^{\infty} [1 + r_{TE}e^{-2uoh}]\ \frac{\lambda^3}{uo}\ J_0\ (\lambda a)\,d\lambda$$

Dispositif de la figure 2c :

$$Hx = \frac{m}{4\pi a} \int_0^{\infty} [1 - r_{TE}e^{-2\lambda h}]\ \lambda J_1(\lambda a)\,d\lambda$$

$$- \frac{m}{4\pi} \int_0^{\infty} [1 - r_{TE}e^{-2\lambda h}]\ \lambda^2 J_0(\lambda a)\,d\lambda$$

Dispositif de la figure 2d :

$$Hx = \frac{-m}{4\pi a} \int_0^{\infty} [1 - r_{TE}e^{-2\lambda h}]\ \lambda J_1(\lambda a)\,d\lambda$$

Pour la configuration sur la figure 2e, le moyen 126 résoud une équation qui correspond à une combinaison des équations ci-dessus.

Dans les équations qui précèdent :

Hz est la composante du champ perpendiculaire à l'interface à contrôler,

Hx est une composante du champ parallèle à l'interface référencée par rapport à l'émetteur,

m est le moment de l'émetteur en $Axm^2$

a est la distance émetteur 110 et récepteur 120

h est la distance entre le plan du dispositif 100 et la surface 22 de la couche intérieure de béton 20

$\lambda$ est une constante d'intégration qui varie de $-\infty$ à $+\infty$.

Ces intégrales ne peuvent être calculées que numériquement avec un pas en $\lambda$ choisi en fonction de la précision souhaitée.

$J_0 (\lambda a)$ et $J_1 (\lambda a)$ sont les fonctions de Bessel d'ordre 0 et d'ordre 1.

$r_{TE}$ est le coefficient de réflexion caractéristique de la structure tabulaire à étudier ; il se calcule par une formule de récurrence à partir des caractéristiques de chaque formation :

$$r_{TE} = \frac{Y_0 - \hat{Y}_1}{Y_0 + \hat{Y}_1}$$

avec

$$Y_i = \frac{u_i}{j\omega\mu_i}$$

$$\hat{Y}_i = Y_i \frac{\hat{Y}_{i+1} + Y_i \tanh(u_i.h_i)}{Y_i + Y_{i+1} \tanh(u_i.h_i)}$$

et

$$\hat{Y}_4 = Y_4 \frac{u_4}{j\omega\mu_4}$$

dans l'encaissant 40

La résolution numérique des équations ci-dessus à l'aide de la méthode de Newton-Raphson, pour extraire la conductivité $\sigma_2$ de l'acier 10 et la perméabilité magnétique $\mu_2$ de l'acier 10, requiert de connaitre les caractéristiques $\sigma_i$, $\mu_i$, et $e_i$ de l'air, du béton et de l'encaissant.

Ces caractéristiques peuvent être connues par expérience ou par des mesures in situ préalables.

On a typiquement :

$\sigma_0 = 0$

$\mu_0 = 4 \pi. 10^{-7}$ H/m

$10^{-4}$ S $< \sigma_1 = \sigma_3 < 10^{-2}$ S

$\mu_1 = \mu_2 = \mu_0$

$10^{-3}$ S $< \sigma_4 < 10^{-1}$S

$\mu_4 = \mu_0$

$e_1 = e_3 = 4$cm

$e_2 = 4$ mm

$e_4 \to \infty$

Les caractéristiques de l'émetteur 100 sont connues :

m = n.S.I

n représentant le nombre de spires de la bobine 110

S représentant la surface de la bobine 110 et

I représentant l'intensité du courant appliqué à la bobine émettrice 110

a = 5 à 20 cm

Les grandeurs mesurées en mV aux bornes de la bobine secondaire 120 sont transformées en valeurs de champ magnétique en A/m.

Lorsque le signal appliqué à la bobine émettrice 110 comprend une seule fréquence, le moyen 126 sépare la composante réelle du signal mesurée, c'est à dire la composante de ce signal en phase avec le signal issu du générateur 114 et la composante imaginaire du signal mesuré, c'est à dire la composante de ce signal en quadrature avec le signal issu du générateur 114, pour former un système à deux équations non linéaires.

Plus précisément encore, de préférence, selon la présente invention, le générateur 114 applique à la bobine émettrice 110 deux fréquences comprises entre 1 et 1000Hz, différentes, mais proches.

La mesure des signaux induits aux bornes de la bobine secondaire 120 permet alors de résoudre un système de quatre équations si l'on sépare la composante réelle et la composante imaginaire du signal mesuré pour chacune des deux fréquences et si l'on tient compte de chacune de ces deux composantes réelles et deux composantes imaginaires.

En variante on peut utiliser deux fréquences d'excitation, mais n'exploiter que les parties réelles ou les parties imaginaires des signaux mesuré, ce qui conduit à un système à deux équations.

En résumé, le processus de traitement mis en oeuvre par le moyen 126 est de préférence le suivant :

- introduction, dans les équations, des caractéristiques connues de l'environnement (conductivité et perméabilité magnétique de l'environnement) et des caractéristiques du champ primaire,
- introduction des valeurs mesurées, par exemple 4 valeurs $ReHf_1$, $ImHf_1$, $ReHf_2$, $ImHf_2$, si l'on utilise 2 fréquences $f_1$, $f_2$ et si l'on sépare partie réelle Re et partie imaginaire Im,
- résolution des équations pour calculer la conductance de la canalisation à contrôler et sa perméabilité.

Une fois les équations ainsi résolues, le système délivre pour chaque position du dispositif les valeurs de la perméabilité et de la conductance. Si le dispositif se déplace le long de la circonférence et le long d'un diamètre ou préférentiellement si plusieurs dispositifs permettent des mesures simultanées le long d'une circonférence et que l'ensemble se déplace le long des canalisations, on peut délivrer deux cartes de la canalisation contrôlée : une carte de conductance (c=$\sigma$.e exprimé en millisiemens) et une carte de perméabilité magnétique relative ($\mu$).

Toute anomalie de la conductance et/ou de la perméabilité magnétique est un indice de corrosion.

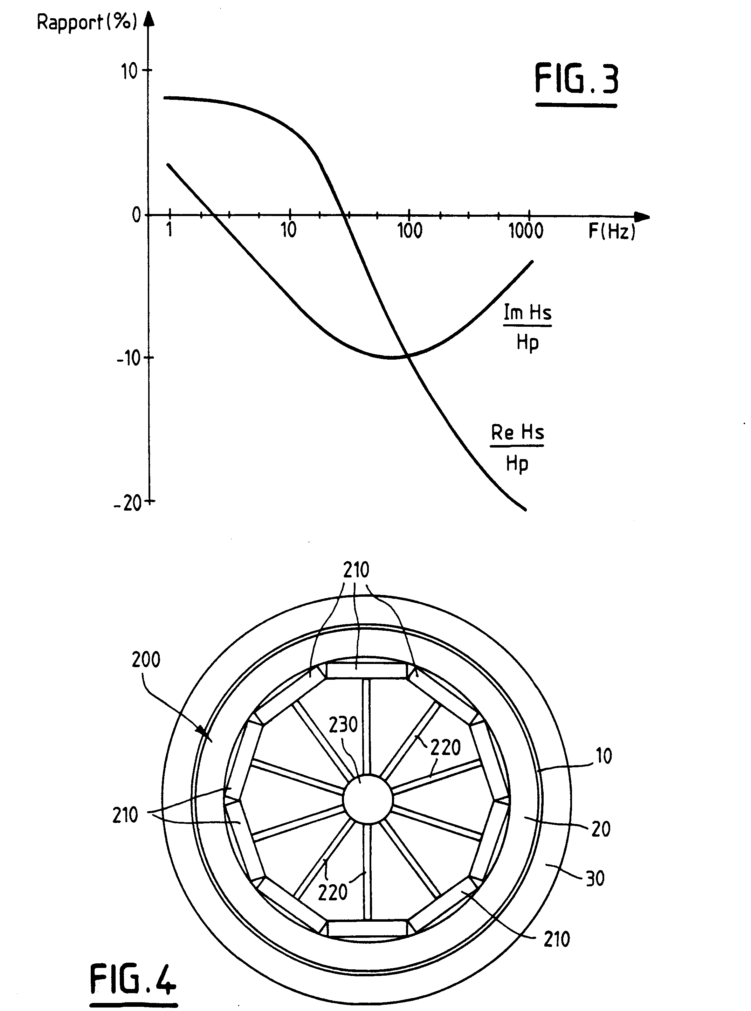

On a représenté sur la figure 3 annexée l'évolution de la partie réelle du champ secondaire et de la partie imaginaire du champ secondaire, en pourcentage du champ primaire, pour une distance "a" donnée, en fonction de la fréquence. Les courbes de la figure 3 permettent de choisir la fréquence en fonction de la sensibilité recherchée et de la géométrie du dispositif.

Selon un mode de mise en oeuvre préférentiel illustré schématiquement sur la figure 4, le système est placé sur un robot 200 conçu pour osculter de manière continue la circonférence de la canalisation.

A cette fin, le robot 200 comprend de préférence plusieurs patins 210 fixés par des bras 220 généralement radiaux sur un porte-patins central 230, lesquels patins 210 s'appliquent suivant une circonférence sur la surface interne de la canalisation. Chaque patin 210 comporte un ou plusieurs capteurs de mesure 110, 120. Chaque bobine 110 portée par un patin 210 est reliée au générateur 114 placé sur le porte patins 230.

De même chaque bobine 120 portée par un patin 210 est reliée aux moyens de mesure 124 et aux moyens 126 de mémorisation et de traitement placés sur le porte-patins central 230.

Le générateur 114 placé au niveau du porte-patins 230 génère le signal électrique d'excitation de façon continue. Préférentiellement, des fréquences légèrement différentes sont choisies pour chacun des dispositifs de façon à pouvoir effectuer des mesures simultanées avec tous les dispositifs situés sur la circonférence. Le robot 200 est déplacé lentement le long de la canalisation, par exemple de l'ordre de 1m par seconde. Le déplacement peut être commandé manuellement ou automatiquement par un système motorisé.

Bien entendu la présente invention n'est pas limitée au mode de réalisation particulier qui vient d'être décrit mais s'étend à toute variante conforme à son esprit.

Par exemple, on peut envisager de remplacer le capteur à deux bobines précédememnt décrit en regard de la figure 1, par un capteur à bobine unique, en mesurant les variations d'impédance de ladite bobine.

On peut aussi appliquer la présente invention pour le contrôle des canalisations en charge, à la condition que le robot 200 puisse le supporter et pour le contrôle de canalisations en acier nu.

## Revendications

1. Système de contrôle de canalisations, notamment de canalisations en acier nu ou enrobé caractérisé par le fait qu'il comprend :
   - un dispositif électromagnétique par induction (100) comportant un élément émetteur (110) et un élément récepteur (120),
   - un générateur (114) apte à appliquer un signal électrique variable à l'élément émetteur (110),
   - un moyen (124) de mesure du signal aux bornes de l'élément récepteur (120),
   - un moyen (126) de traitement du signal mesuré aux bornes de l'élément récepteur (120) apte à déterminer la perméabilité magnétique de la canalisation et la conductivité ou la conductance électrique de celle-ci, par résolution à l'aide d'une méthode itérative d'un système d'équations non linéaires qui décrivent le comportement des composantes du champ magnétique.

2. Système selon la revendication 1, caractérisé par le fait que le dispositif électromagnétique comprend deux bobines (110, 120) formant respectivement bobine émettrice et bobine réceptrice.

3. Système selon l'une des revendications 1 ou 2, caractérisé par le fait que les bobines (110, 120) ont des axes (112, 122) coplanaires.

4. Système selon l'une des revendications 1 à 3, caractérisé par le fait que la disposition des bobines est choisie dans l'une des cinq configurations suivantes :
   - bobines (110, 120) perpendiculaires entre elles, l'une émettrice (110) ayant son axe (112) parallèle aux interfaces à contrôler et l'autre réceptrice (120), ayant son axe (122) perpendiculaire auxdites interfaces à contrôle,
   - bobines (110, 120) ayant chacune son axe (110, 120) perpendiculaire aux interfaces à contrôler,
   - bobines (110, 120) coaxiales ayant leurs axes (112, 122) parallèles aux interfaces à contrôler,
   - bobines (110, 120) ayant leurs axes (112, 122) parallèles entre eux et parallèles aux interfaces à contrôler,
- bobines (110, 120) ayant leurs axes (112, 122) parallèles entre eux et obliques par rapport aux interfaces à contrôler.

5. Système selon la revendication 1, caractérisé par le fait que le dispositif électromagnétique comprend une bobine unique servant à la fois d'émetteur et de récepteur.

6. Système selon l'une des revendications 1 à 5, caractérisé par le fait que le générateur (112) délivre un signal sinusoïdal.

7. Système selon l'une des revendications 1 à 6, caractérisé par le fait que le système délivre un signal de fréquence comprise entre 1 et 1000Hz.

8. Système selon l'une des revendications 1 à 7, caractérisé par le fait que les moyens de traitement (126) séparent la partie réelle et la partie imaginaire du signal mesuré pour définir un système de deux équations.

9. Système selon l'une des revendications 1 à 6, caractérisé par le fait que le générateur (110) délivre deux fréquences proches comprises entre 1 et 1000Hz.

10. Système selon la revendication 9, caractérisé par le fait que les moyens de traitement (126) séparent la partie réelle et la partie imaginaire des deux fréquences du signal mesuré pour définir un système de quatre équations.

11. système selon la revendication 9, caractérisé par le fait que les moyens de traitement (126) exploitent la partie réelle ou la partie imaginaire des deux fréquences du signal mesuré pour définir un système de deux équations.

12. Système selon l'une des revendications 1 à 11, caractérisé par le fait que la distance (a) entre les deux bobines (110, 120), est typiquement de 1 à 5 fois, la distance séparant le capteur (100) de la paroi de canalisation (10) à contrôler.

13. Système selon l'une des revendications 1 à 12, caractérisé par le fait que les moyens de traitement (126) résolvent le système d'équations à l'aide du processus de Newton-Raphson.

14. Système selon l'une des revendications 1 à 13, caractérisé par le fait qu'il comprend un robot (200) adapté pour être déplacé dans la canalisation et qui comprend plusieurs patins (210) portant chacun un dispositif électromagnétique (100), et un porte-patins central (230) qui supporte les patins par l'intermédiaire de bras (220) généralement radiaux et qui porte le générateur (114) et les moyens de mesure et de traitement (124, 126).

15. Système selon l'une des revendications 1 à 14, caractérisé par le fait que les moyens de traitement (126) exploitent l'une des équations suivantes :

$$Hz = \frac{m}{4\pi} \int_0^\infty (1+r_{TE}e^{-2\lambda h})\, \lambda^2 J_1(\lambda a)\,d\lambda$$

$$Hz = \frac{m}{4\pi} \int_0^\infty [1+r_{TE}e^{-2u_0 h}]\, \frac{\lambda^3}{u_0}\, J_0(\lambda a)\,d\lambda$$

$$Hx = \frac{m}{4\pi a} \int_0^\infty [1 - r_{TE} e^{-2\lambda h}] \, \lambda J_1(\lambda a) \, d\lambda$$

$$- \frac{m}{4\pi} \int_0^\infty [1 - r_{TE} e^{-2\lambda h}] \, \lambda^2 J_0(\lambda a) \, d\lambda$$

$$Hx = \frac{-m}{4\pi a} \int_0^\infty [1 - r_{TE} e^{-2\lambda h}] \, \lambda J_1(\lambda a) \, d\lambda$$

Hz est le champ perpendiculaire à l'interface à contrôler,

Hx est le champ parallèle à l'interface à contrôler,

m est le moment de l'émetteur en $Axm^2$,

a est la distance émetteur (110) et récepteur (120),

h est la distance entre le plan du dispositif (100) et la surface (22) de la couche intérieure de béton (20),

$\lambda$ est une constante d'intégration qui varie de $-\infty$ à $+\infty$,

Jo $(\lambda a)$ et Ji $(\lambda a)$ sont les fonctions de Bessel d'ordre 0 et d'ordre 1,

$r_{TE}$ est le coefficient de réflexion caractéristique de la structure tabulaire à étudier calculé par une formule de récurrence à partir des caractéristiques de chaque formation :

$$r_{TE} = \frac{Y_0 - \hat{Y}_1}{Y_0 + \hat{Y}_1}$$

avec

$$Y_i = \frac{u_i}{j\omega\mu_i}$$

$$\hat{Y}_i = Y_i \frac{\hat{Y}_{i+1} + Y_i \tanh(u_i.h_i)}{Y_i + Y_{i+1} \tanh(u_i.h_i)}$$

et

$$\hat{Y}_4 = Y_4 \frac{u_4}{j\omega\mu_4}$$

dans l'encaissant (40).

## FIG.1

## FIG.2

FIG.2a

FIG.2b

FIG.2c

FIG.2d

FIG.2e

FIG.3

FIG.4

Office europćen
des brevets

**RAPPORT DE RECHERCHE EUROPEENNE**

Numero de la demande

EP    93 40 1851

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A | PATENT ABSTRACTS OF JAPAN vol. 12, no. 380 (P-769)12 Octobre 1988 & JP-A-63 124 209 ( SANYO ) 27 Mai 1988 * abrégé * | 1 | G01N27/90 |
| A | EP-A-0 260 355 (NIPPON) * abrégé; figure 2 * | 1,3,14 | |
| A | EP-A-0 449 753 (VALLOUREC) * abrégé * * colonne 3, ligne 8 - ligne 13; figure 1 * | 1,9 | |
| A | EP-A-0 392 295 (SIEMENS) * abrégé * * colonne 3, ligne 10 - ligne 12; figure 1 * | 1,2 | |
| A | EP-A-0 370 691 (NNC LIMITED) * abrégé; figure 1 * | 1,4,14 | |
| | | | **DOMAINES TECHNIQUES RECHERCHES (Int. Cl.5 )** |
| | | | G01N |

Le présent rapport a été établi pour toutes les revendications

| Lieu de la recherche | Date d'achèvement de la recherche | Examinateur |
|---|---|---|
| LA HAYE | 27 OCTOBRE 1993 | KEMPF G.V. |